# EUROPEAN PATENT APPLICATION

(11) **EP 4 793 306 A1**
(43) Date of publication of application: **19.08.2026**
(21) Application number: 25158157.5
(22) Date of filing: 16.02.2025
(51) Int. Cl.: C08G 63/16, C08J 9/12

(54) **REPEATEDLY RECYCLABLE POLYOLEFIN-BASED COPOLYMER MIMICS (RR-PCM) FOAMS**

(71) Applicant: SABIC Global Technologies B.V., 4612 PX Bergen op Zoom (NL)
(72) Inventor: Jin, Jieyu, 6160 GA Geleen (NL); Koripelly, Girish, 6160 GA Geleen (NL); Chinta, Sivadinarayana, 6160 GA Geleen (NL); Sun, Shaocheng, 6160 GA Geleen (NL); Soliman, Maria, 6160 GA Geleen (NL); Kannan, Ganesh, 6160 GA Geleen (NL)
(74) Representative: Sabic INDIA Intellectual Property Group

(57) **Abstract**

Foams produced from repeatedly-recyclable polyolefin-based copolymer mimics are described.

## Description

### BACKGROUND OF THE INVENTION

### A. Field of the Invention

The invention generally relates to foams that can be prepared from recyclable polyolefin-based copolymer mimics (RR-PCM). The foams are recyclable, and the recycled materials can be used to create another foam or another article (e.g., a non-foam article).

### B. Description of Related Art

Polyolefins have multiple industrial uses. Polyolefins such as polyethylene constitute the largest volume of synthetic plastic produced worldwide. Polyolefins such as low-density polyethylene (LDPE), high-density polyethylene (HDPE), linear low-density polyethylene (LLDPE), and/or polypropylene (PP) are used in wide variety of articles, such as films, sheets, foams, fibers, toys, bottles, containers, furniture, electronic parts, and/or plumbing materials. One of the issues with the wide-spread use of polyolefins is what to do with the articles once they reach the end of their useability. One solution is to simply discard the articles ("single use articles") and prepare new ones from new chemicals. A problem with this approach is the use of landfills and/or incinerators to discard and/or destroy the articles. Landfills are reaching capacity, and incinerators can create pollution. Still further, the use of new chemicals can be wasteful and/or increase the carbon footprint of the resulting article.

Efforts have been made to collect and recycle waste material generated during manufacturing and waste material from used products. However, in many cases waste and scrap plastics cannot simply be mixed with the original raw materials, as the recycled material may not be consistent from batch to batch, may be contaminated, or may have thermosetting properties that prevent use in this manner. Examples of methods of producing and recycling polyesters are described in International Patent Application Publication Nos. WO 2022/214650 to Chinta *et al.,* and WO 2022/214642 to Chinta *et al.*

With respect to articles comprising foam (e.g., shoe soles, padding used in upholstery (e.g., chairs, sofas, mattresses, etc.), food and/or drink containers, packaging foam, etc.), such articles can be made from a variety of polymers such as polystyrene, polyurethane, polyethylene, and/or polypropylene. One of the issues with such foam-based articles is that it can be costly and energy intensive to recycle such articles. Additionally, the energy input into these recycling efforts can have a negative effect on the polymer properties. In particular, recycling polymeric foams can result in polymer degradation caused from chain scission. Chain scission can also result in the formation of reactive free radicals, which can result in crosslinking.

Still further, polyolefins are widely used in creating foam articles that require strength (e.g., sportswear articles such as insole of shoe, midsole of shoe, yoga mat, etc.). However, these types of foam articles are oftentimes crosslinked during the foaming process in order to achieve certain melt strength for creating the foam. Crosslinking can also help with strengthening the mechanical properties of the foam so that it can be used in certain end-use applications that require strength (e.g., sportswear applications). An issue with crosslinked foams, however, is that such foams typically cannot be recycled.

### SUMMARY OF THE INVENTION

A discovery has been made that provides a solution to at least one or more of the problems that may be associated with foams, including manufacturing and/or recycling foam articles (e.g., shoe insoles, show midsoles, padding used in upholstery (e.g., chairs, sofas, mattresses, etc.), food and/or drink containers, packaging foam, etc.). In one aspect, the solution can include the use of a repeatedly-recyclable polyolefin copolymer mimic (RR-PCM) that can be used to make foams. In one aspect, the RR-PCM foams of the present invention can be chemically recycled to a difunctional linker, a difunctional oligomer, and a difunctional hydrogenated polyolefin-based oligomer. These linkers and oligomers can then be used to create a new RR-PCM, which can then be used to create a new article (e.g., a new foam article). Still further, and in certain aspects, the RR-PCM foams of the present invention can have minimal (e.g., less than 5 %) to no cross-linking. The RR-PCM foams of the present invention can be advantageous in that there can be less energy used during recycling when compared with typical mechanical recycling efforts. Still further, by using the recycled linkers and oligomers to create a new RR-PCM, the new RR-PCM can have similar properties (e.g., strength) to the pre-recycled or virgin RR-PCM, which can allow for an article made from the new RR-PCM to have similar properties to a pre-recycled article made from, for example, pre-recycled or virgin RR-PCM.

In some aspects of the present invention, repeatedly-recyclable polyolefin-based copolymer mimic (RR-PCM) foams are described. The RR-PCM contained in the foam can be a reaction product of a difunctional linker, a difunctional oligomer, and a difunctional hydrogenated polyolefin-based oligomer. The foam of the present invention can have a stress break at 1 MPa to 5 MPa, an elongation break of at least 50%, preferably 100 % to 400%, or any combination thereof. Stress break and elongation break can be determined using standardized methods such as, for example, ASTM D412. In some aspects, the foam can have a rebound after foaming of 40% to 80%, and a rebound of 30% to 75% after 24 hours after foaming. Foam rebounding can be measured using standardized methods, for example, ASTM D2632.

The difunctional linker can have a carbon chain of two to thirteen carbon atoms (C2 to C13) and a functionality (F) of 2.0 ±0.3. The difunctional oligomer can have 40 to 2000 carbon atoms (C40 to C2000) and a functionality (F) of 2.0 ± 0.3. In some instances, the difunctional oligomer can have branching of 0 to 50%. The difunctional hydrogenated polyolefin-based oligomer can have 40 to 2000 carbon atoms (C40 to C2000) and a functionality (F) of 2.0 ± 0.3. For the difunctional linker, difunctional oligomer and the difunctional hydrogenated polyolefin-based oligomer, F is independently selected from an amine (-NH₂), an alcohol (-OH), a carboxylic acid (-COOH), and combinations thereof. The difunctional hydrogenated polyolefin-based oligomer can have a branching of 0 to 50%. The total amount of branching in the RR-PCM can be 70% or less as measured by NMR. The RR-PCM can have repeating units according to Formula I and Formula II: 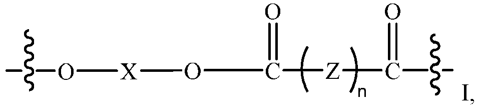 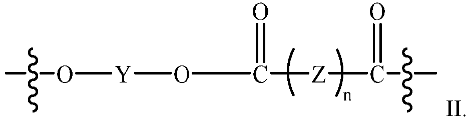 In Formula I and II, n is an integer ranging from 2 to 13. Z can be an aliphatic group for each of Formula I and II. X can be a linear polyolefin backbone that includes 40 to 2000 carbon atoms, preferably 60 to 1500 carbon atoms, or more preferably 80 to 1100 carbon atoms. Y can be a hydrogenated polyolefin-based backbone that can have 40 to 2000 carbon atoms, preferably 60 to 1500 carbon atoms, or more preferably 80 to 1100 carbon atoms. Formula I or Formula II, or both, can have 0.01 to 40 ester groups per 1,000 backbone carbon atoms. In some aspects, the RR-PCM can have a polydispersity index of 2 to 6, a melting point of 70 °C to 130 °C, preferably 115 °C to 120 °C, or any combination thereof. The number average molecular weight (Mₙ) of the RR-PCM can range from 0.5 Kg/mol to 100 Kg/mol, preferably 3 Kg/mol to 95 Kg/mol. Mₙ and PDI can be determined using standardized methods, for example, ISO 16014-4 and ASTM D6474 methods at 150 °C to 160 °C. Melting point can be measured using standardized methodology, for example, using ISO-11357-1 and/or DSC with a heating rate of 10 °C/min.

In some aspects of the present invention, the RR-PCM can be obtained from an article that includes a difunctional linker, a difunctional oligomer, and a difunctional hydrogenated polyolefin-based oligomer.

Methods of making the foams of the present invention are described. A method of making the foam can include subjecting a repeatedly recyclable-polyolefin copolymer mimic (RR-PCM) to foaming conditions suitable to produce a foam. The RR-PCM is a reaction product of a difunctional linker, a difunctional oligomer, and a difunctional hydrogenated polyolefin-based oligomer. The number average molecular weight (Mₙ) of the RR-PCM ranges from 0.5 Kg/mol to 100,000 g/mol, preferably 500 g/mol to 9,500 g/mol.

Articles of manufacture that include the foams of the present invention are described. An article of manufacture can be a shoe sole, preferably an insole, a midsole, or an outsole, preferably a midsole. In some aspects of the present invention, the article of manufacture can be a yoga mat.

Other embodiments of the invention are discussed throughout this application. Any embodiment discussed with respect to one aspect of the invention applies to other aspects of the invention as well and vice versa. Each embodiment described herein is understood to be embodiments of the invention that are applicable to other aspects of the invention. It is contemplated that any embodiment discussed herein can be implemented with respect to any method or composition of the invention, and vice versa. Furthermore, compositions of the invention can be used to achieve methods of the invention.

The following includes definitions of various terms and phrases used throughout this specification.

"Article Additive" means an additive from an article being recycled. For example, if an article is being recycled in the context of the present invention, an additive from the recycled article is an article additive. Therefore, a composition and/or article produced from a recycled article of the present invention can include an additive or additive package from the recycled article. For example, an additive from liquified recycled article.

"Repeatedly-Recyclable Polyolefin Copolymer Mimic (RR-PCM) " or "RR-PCM" means a polyolefin-based copolymer that is a mimic of a copolymer made from polyethylene or polypropylene. The RR-PCP is a reaction product of difunctional linker(s), difunctional oligomer(s), and difunctional hydrogenated polyolefin-based oligomer(s). The difunctional linker(s), difunctional oligomer(s), and difunctional hydrogenated polyolefin-based oligomer(s) can be obtained from a liquefied article that includes the difunctional linker(s), difunctional oligomer(s), and difunctional hydrogenated polyolefin-based oligomer(s). The RR-PCM can be made into an article that is then liquefied by being heated and depolymerized into a mixture of difunctional linker(s), difunctional oligomer(s), and difunctional hydrogenated polyolefin-based oligomer(s). The difunctional linker(s), difunctional oligomer(s), and difunctional hydrogenated polyolefin-based oligomer(s) can then be repolymerized into another RR-PCM and re-used to produce another article. The process of the present invention can be repeated multiple times (e.g., 2, 3, 4, 5, 6, 7, 8, 9, 10, or more) so that at least two additional or new articles can be made from the RR-PCM starting material that was obtained from the recycled article.

The term "linker" means an aliphatic group (e.g., "Z") that can couple and decouple to a RR-PCM oligomer (e.g., "X").

"Virgin Repeatedly Recyclable-Polyolefin Copolymer Mimic" or "virgin RR-PCM" is newly made directly from difunctional linker(s), difunctional oligomer(s), and difunctional hydrogenated polyolefin-based oligomer(s) (and have not been obtained from an article). Virgin RR-PCM has not previously been depolymerized and repolymerized.

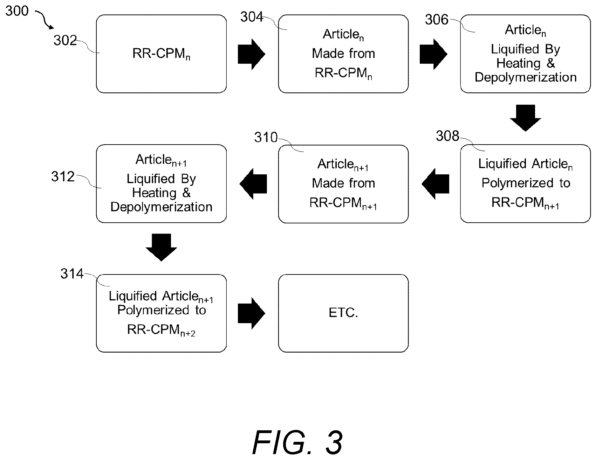

"Use Cycle" indicates how many times a RR-PCM composition of the present invention can be used to make different articles. The different article can be a new article made from the RR-PCM, and the new article can be the same type of article (e.g., the article to be recycled and the recycled article can both be the same type of article (e.g., a footwear sole)), or the new article can be another type of article (e.g., the article to be recycled can be a foam and the recycled article can be a foamed panel). For instance, for a RR-PCM having a Use Cycle 0 rating, the RR-PCM is a "virgin RR-PCM", and, therefore, the virgin RR-PCM of the composition is made directly from difunctional linker(s), difunctional oligomer(s), and difunctional hydrogenated polyolefin-based oligomer(s) of the present invention (the virgin RR-PCM has not been used to make an article). A RR-PCM of the composition having a Use Cycle 1 rating means that the RR-PCM has been used once to make an article. A RR-PCM having a Use Cycle 2 rating means the RR-PCM has been used twice to make, for example, two different articles. A RR-PCM at Use Cycle 3 means the RR-PCM has been used three times to make, for example, three different articles. As such, a RR-PCM having a Use Cycle "n" means that the RR-PCM can been used n times to make n different articles and impart substantially similar to identical functional properties. FIG. 3 provides a non-limiting example of a visually depiction of a Use Cycle of a RR-PCM of the present invention.

The term "branching" refers the regular or random attachment of side chains to a polymer's backbone chain.

The term "degree of branching (DB)" of a group/oligomer/polymer refers to % of branched carbons in the backbone of the group/oligomer/polymer as measured by ¹H NMR or ¹³C NMR. For example, the following group having Structure (A), has a degree of branching of 25%. The branched carbons in the backbone of the group of Structure II is marked with a *. R' in Structure A is a branching group, can be an alkyl group, and y is an integer and denotes number of repeat units.

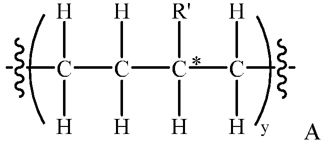

The term "linear hydrocarbon" refers to a hydrocarbon having a continuous carbon chain without side chain branching. The continuous carbon chain may be optionally substituted. The optional substitution can include replacement of at least one hydrogen atom with a functional group, such as hydroxyl, acid, amine, or halogen group; and/or replacement of at least one carbon atom with a heteroatom.

The term "branched hydrocarbon" refers to a hydrocarbon having a linear carbon chain containing branches, such as substituted and/or unsubstituted hydrocarbyl branches, bonded to the linear carbon chain. Optionally, the linear carbon chain can contain additional substitution. Optional additional substitutions can include replacement of at least one carbon atom in the linear carbon chain with a heteroatom and/or replacement of at least one hydrogen atom directly bonded to a carbon atom of the linear chain with a functional group, such hydroxyl, acid, amine, or halogen group.

The terms "about" or "approximately" are defined as being close to as understood by one of ordinary skill in the art. In one non-limiting embodiment, the terms are defined to be within 10%, preferably within 5%, more preferably within 1%, and most preferably within 0.5%.

The terms "wt.%," "vol.%," or "mol.%" refers to a weight percentage of a component, a volume percentage of a component, or molar percentage of a component, respectively, based on the total weight, the total volume of material, or total moles, which includes the component. In a non-limiting example, 10 grams of component in 100 grams of the material is 10 wt.% of component.

The term "substantially" and its variations are defined to include ranges within 10%, within 5 %, within 1 %, or within 0.5 %.

The terms "inhibiting" or "reducing" or "preventing" or "avoiding" or any variation of these terms, when used in the claims and/or the specification includes any measurable decrease or complete inhibition to achieve a desired result.

The term "effective," as that term is used in the specification and/or claims, means adequate to accomplish a desired, expected, or intended result.

The use of the words "a" or "an" when used in conjunction with any of the terms "comprising," "including," "containing," or "having" in the claims, or the specification, may mean "one," but it is also consistent with the meaning of "one or more," "at least one," and "one or more than one."

The phrase "and/or" means "and" or "or". To illustrate, A, B, and/or C includes: A alone, B alone, C alone, a combination of A and B, a combination of A and C, a combination of B and C, or a combination of A, B, and C.

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The foams of the present invention can "comprise," "consist(s) essentially of," or "consist of" particular groups, compositions, etc. disclosed throughout the specification. In one aspect of the present invention, and with reference to the transitional phrase "consist(s) essentially of" or "consisting essentially of," a basic and novel characteristic of the present invention can include a repeated-recyclable polyolefin copolymer mimic foam (RR-PCM) that includes a repeatedly recyclable-polyolefin copolymer mimic (RR-PCM). The RR-PCM can be a reaction product of a difunctional linker, a difunctional oligomer, and a difunctional hydrogenated polyolefin-based oligomer. The number average molecular weight (Mₙ) of the RR-PCM ranges can range from 0.5 Kg/mol to 100,000 g/mol, preferably 500 g/mol to 100,000 g/mol, preferably 500 g/mol to 9,500 g/mol.

Other objects, features and advantages of the present invention will become apparent from the following detailed description and examples. It should be understood, however, that the detailed description and examples, while indicating specific embodiments of the invention, are given by way of illustration only and are not meant to be limiting. Additionally, it is contemplated that changes and modifications within the spirit and scope of the invention will become apparent to those skilled in the art from this detailed description. In further embodiments, features from specific embodiments may be combined with features from other embodiments. For example, features from one embodiment may be combined with features from any of the other embodiments. In further embodiments, additional features may be added to the specific embodiments described herein.

### BRIEF DESCRIPTION OF THE DRAWINGS

Advantages of the present invention may become apparent to those skilled in the art with the benefit of the following detailed description and upon reference to the accompanying drawings.
**FIG.** 1 is an illustration of a system and method of the present invention to produce the RR-PCM and foam of the present invention.
**FIG.** 2 is an illustration of a system and method of the present invention to recycle a foam and RR-PCM of the present invention.
**FIG.** 3 is an illustration of a closed loop Use Cycle of a RR-PCM foam of the present invention.
**FIG.** 4 depicts an image of a foam of the present invention.
**FIGS. 5A and 5B** depict images of the foam of the present invention (FIG. 5A) after foaming at a temperature 125 °C and the molded plaque prior to foaming (FIG. 5B).
**FIG.** 6 depicts images of the foam of the present invention (left) foamed at a temperature of 120 °C and the molded plaque (right) prior to foaming.
**FIG.** 7 depicts two images of a foam of the present invention made at different foaming temperatures. The left image was foamed at 116 °C and the right image was foamed at 125 °C.

While the invention is susceptible to various modifications and alternative forms, specific embodiments thereof are shown by way of example in the drawings. The drawings may not be to scale.

### DETAILED DESCRIPTION OF THE INVENTION

RR-PCM foams of the present invention can be chemically recycled by breaking down the RR-PCM foams into difunctional linkers, difunctional oligomers, and difunctional hydrogenated polyolefin-based oligomers. These linkers and oligomers can then be used to create a new RR-PCM, which can be used to create a new article (e.g., a new foam article). Notably, the RR-PCM foams can have minimal (e.g., less than 5 %) to no cross-linking. The RR-PCM foams of the present invention can be advantageous in that there can be less energy used during recycling when compared with typical mechanical recycling efforts. Still further, by using the recycled linkers and oligomers to create a new RR-PCM, the new RR-PCM can have similar properties (e.g., strength) to the pre-recycled or virgin RR-PCM, which can allow for an article made from the new RR-PCM to have similar properties to a pre-recycled article made from, for example, pre-recycled or virgin RR-PCM. The RR-PCM foams of the present invention provide a solution to the difficulties associated with known foams and recycling such known foams.

These and other non-limiting aspects of the present invention are discussed in further detail in the following sections with reference to the Figures.

### A. RR-PCM Foams

The foam can include a RR-PCM of the present invention. Non-limiting examples of foams of the present invention can include closed cell foams, open cell foams, rigid foams, flexible foams, and integral skin foams. The RR-PCM foam can have rebound of 40% to 80% (e.g., 40%, 45%, 50%, 55%, 60%, 65%, 70%, 75%, or 80% or any range or value there between), and a rebound of 30% to 75% (e.g., 30%, 35%, 40%, 45%, 50%, 55%, 60%, 6%5, 70%, or 75%, or any range or value there between) after 24 hours after foaming. The foam can include at least 95 wt.% to 100 wt.% (e.g., 95 wt.%, 96 wt.%, 97 wt.%, 98 wt.%, 99 wt.%, 100 wt.% or any value or range there between) of the RR-PCM(s). The RR-PCM foam can include one or more additives. The amount of additives can vary by application and can be from greater than 0 wt.% to 5 wt. %, or 0.00001 wt. %, 0.0001 wt. %, 0.001 wt. %, 0.01 wt. 0.05 wt. %, 0.06 wt. %, 0.07 wt. %, 0.08 wt. %, 0.09 wt. %, 0.1 wt. %, 0.2 wt. %, 0.3 wt. %, 0.4 wt. %, 0.5 wt.%, 0.6 wt. %, 0.7 wt. %, 0.8 wt. %, 0.9 wt. 1, 1 wt. %, 2 wt. %, 3 wt. % 4 wt. %, or 5 wt. %, or any number or range there between. In some aspects the foam does not include any other polyolefin copolymers, high-density polyethylene (HDPE), low-density polyethylene (LDPE), linear low-density polyethylene (LLDPE), polyolefin elastomer (POE), plastomer polyolefin (POP), and/or polypropylene (PP), and/or combinations thereof.

### B. RR-PCM Composition

The repeatedly recyclable-polyolefin copolymer mimic (RR-PCM) comprised in the foam of the present invention can be a reaction product of a difunctional linker, a difunctional oligomer, and a difunctional hydrogenated polyolefin-based oligomer. The RR-PCM can be a random block copolymer, or alternatively block copolymers. Block copolymers include di-blocks, tri-blocks, multi-blocks, and star-shaped block copolymers. The RR-PCM can have a PDI of 2 to 6 (e.g., 2, 3, 4, 5, 6 or any value or range there between). The number average molecular weight (Mₙ) of the RR-PCM ranges can range from 0.5 Kg/mol to 100,000 g/mol or 500 g/mol, 1,000 g/mol, 1500 g/mol, 2000 g/mol, 2500 g/mol, 3000 g/mol, 3500 g/mol, 4000 g/mol, 4500 g/mol, 5000 g/mol, 5500 g/mol, 6000 g/mol, 6500 g/mol, 7000 g/mol, 7500 g/mol, 8000 g/mol, 8500 g/mol, 9000 g/mol, 9500 g/mol, 10,000, or 100,000 g/mol or any range or value there between. In some aspects, the number average molecular weight (Mₙ) of the polymer can be 1,000 g/mol to 1,000,000 g/mol, 20,000 to 500,000 g/mol, or 40,000 to 200,000 g/mol.

The RR-PCM composition of the present invention can have a melt temperature (Tₘ) of 70 °C to 130 °C, 115 °C to 120 °C, or 70 °C, 75 °C, 80 °C, 85 °C, 90 °C, 95 °C, 100 °C, 110 °C, 115 °C, 120 °C, 125 °C, or 130 °C, or any value or range there between as measured by DSC at a heating rate of 10 °C per min. In one aspect, the Tₘ of the composition of the present invention is 123.2 °C. The RR-PCM can have an elongation break of 50% or more, or 100% to 400% (e.g., 50%, 55%, 60%, 65%, 70%, 75%, 80%, 85%, 90%, 95%, 100%, 125%, 150%, 175%, 200%, 225%, 250%, 275%, 300%, 325%, 350%, 375%, or 400% or any value or range there between). The RR-PCM of the present invention can have a stress break at 1 MPa to 5 MPa *(e.g.,* 1 MPa, 1.5 MPa, 2 MPa, 2.5 MPa, 3 MPa, 3.5 MPa, 4 MPa, 4.5 MPa, or 5 MPa, or any range or value there between). In some aspects, the RR-PCM has a stress break at 1 MPa to 5 MPa and an elongation break of 100% to 400%.

The RR-PCM can include repeating units of a difunctional linker (Z), a difunctional oligomer (X), and the difunctional hydrogenated polyolefin-based oligomer (Y). In some aspects, the difunctional linker, difunctional oligomer and/or difunctional hydrogenated polyolefin-based oligomer are obtained from a liquified article.

In some preferred aspects, the RR-PCM of the present invention can include repeating units of polymers having Formula (I) and/or Formula (II). In Formulas (I) and (II) n is an integer ranging from 2 to 13 carbons.

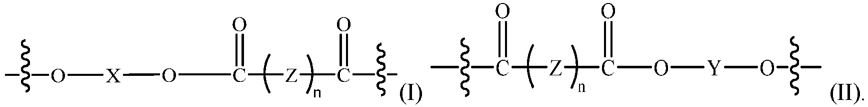

In one aspect, the repeating units can form a block copolymer mimic having the structure of Formula (III).

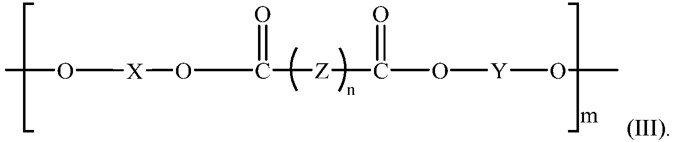

In Formula (III), n is an integer ranging from 2 to 13 and m is an integer ranging from 1 to 100. In some aspects, n is 2 and the RR-PCM can have the structure represented by Formulas (Ia), (IIa), (IIIa):

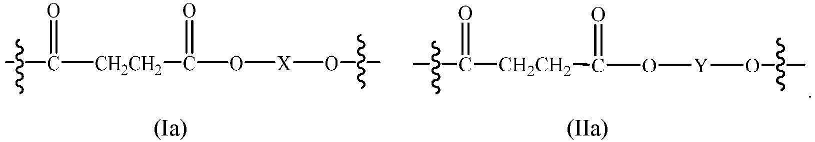

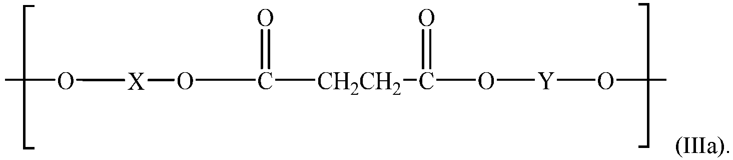

In the RR-PCM composition of the present invention, X and Y have more than 0 and less than 40 ester groups per 1000 backbone (CH₂) carbon units. Although ketones are illustrated as side groups in the Formulas I, Ia, II, IIa, III, and IIIa, the one or more side functional groups of Z can be one or more of hydroxyl (-OH), carboxylic acid (CO₂H), amine (NH₂), or a combination thereof, and the oxygens bonded to X or Y can be ketones, amines, etc. In some aspects, the functional groups can contain hydrocarbon groups linking the functional group to the backbone of Z. In certain aspects, Z can vary randomly between the repeating units of Formulas I, Ia, II, IIa, III, and IIIa.

In Formulas I, II, and III, Z can be an aliphatic group and represents the carbon backbone of the difunctional linker. Z can contain up to 13 carbon atoms, or equal to any one of, at least any one of, or between any two of 2, 3, 4, 5, 6, 7, 8, 9, 10, 11, 12, 13 carbon atoms. In certain aspects, Z can contain 2 to 13 carbon atoms. In certain aspects, Z can be a C1 to C13 aliphatic group. In some aspects, Z can be a linear or a branched hydrocarbon. In some aspects, Z can be a branched hydrocarbon.

In Formulas I, Ia, III, and IIIa, X can be a linear or branched aliphatic group. X can contain at least 40 carbon atoms. In certain aspects, X can vary randomly between the repeating units of Formula (I) and Formula (Ib), such as number of carbon atoms. In certain aspects, X does not vary between the repeating units of Formula (I). In some aspects, X can include 40 to 2,000, or equal to any one of, at least any one of, or between any two of 40, 45, 50, 55, 60, 65, 70, 80, 90, 100, 150, 200, 220, 240, 260, 280, 300, 320, 340, 360, 380, 400, 420, 440, 460, 480, 500, 520, 540, 560, 580, 600, 650, 700, 750, 800, 850, 900, 950, 1,000, 1100, 1200, 1300, 1400, 1500, 1600, 1700, 1800, 1900, 2000 carbon atoms. X can have a degree of saturation 97 to 100 %, or equal to any one of, at most any one of, or between any two 97, 97.5, 98, 98.5, 99, 99.5 and 100 %. X can have a degree of branching from 0% to 50% or 0%, 5%, 15%, 20%, 25%, 30%, 35%, 40%, or 50% or any value or range therebetween.

Y can be a difunctional hydrogenated polyolefin-based backbone having 5 to 30 carbon atoms, 5 to 20 carbon atoms or 5 to 15 carbon atoms, or 5, 6, 7, 8, 9, 10, 11, 12, 13, 14, 15, 16, 17, 18, 19, 20, 21, 22, 23, 24, 25, 26, 27, 28, 29, 30 or any range or value there between of carbon atoms. Y can include 40 to 2,000, or equal to any one of, at least any one of, or between any two of 40, 45, 50, 55, 60, 65, 70, 80, 90, 100, 150, 200, 220, 240, 260, 280, 300, 320, 340, 360, 380, 400, 420, 440, 460, 480, 500, 520, 540, 560, 580, 600, 650, 700, 750, 800, 850, 900, 950, 1,000, 1100, 1200, 1300, 1400, 1500, 1600, 1700, 1800, 1900, 2000 carbon atoms. Y can have a degree of saturation 97 to 100 %, or equal to any one of, at most any one of, or between any two 97, 97.5, 98, 98.5, 99, 99.5 and 100 %. In some embodiments, Y is a hydrogenated polybutadiene-based oligomer. The butene content in the hydrogenated polybutadiene-based oligomer can range from 1 mol% to 15 mol%, or 1 mol%, 2 mol%, 3 mol%, 4 mol%, 5 mol%, 6 mol%, 7 mol%, 8 mol%, 9 mol%, 10 mol%, 11 mol%, 12 mol%, 13 mol%, 14 mol%, or 15 mol%, or any value or range there between. In some aspects, Y has a degree of branching greater than, the same as, or less than X. Y can have a degree of branching of greater than 0% and less than 70%, preferably 5 to 65%, more preferably 10 to 65%, most preferably 65%, In some embodiments, X has a degree of branching of 0% and Y has a degree of branching of greater than 0%, 40%, 50%, or preferably 65%. In another embodiment, X has a degree of branching of 1% to less than 50% and Y has a degree of branching such that the total degree of branching is 70% or less.

### C. Additives

The foams and/or RR-PCMs of the present invention can include additives. In some instances, the RR-PCMs include at least one article additive (e.g., an additive from a liquified foam), and/or optional additives. The article additive (e.g., RR-PCM additive) can be present when a RR-PCM of the present invention is made into a foam. Non-limiting examples of foam additives can include, but are not limited to, an antioxidant, a metal deactivator, a processing aid, a UV stabilizer, a pigment, a phosphite, a phosphinate, a colorant, a foaming agent, a filler, an anti-abrasion agent, or mixtures thereof. In some embodiments, combinations of the foam additives can be combined as a package to be added to the composition prior to foaming. The choice of additive packages may be driven by the specific type of foam being made and its intended use.

Non-limiting examples of antioxidant additives can include 3,3'3",5,5',5'-hexatert-butyl-alpha,alpha',alpha,"-(mesitylene-2,4,6-triyl )tri-p-cresol (CAS 1709-70-2) commercially known as Irganox 1330 (Ciba Specialty Chemicals) or Ethanox 330 (Albemarle Corporation); pentaerythritol tetrakis (3-(3,5-di-tert-butyl-4-hydroxyphenyl)propionate) (CAS 6683-19-8) available as Irganox 1010 (Ciba Specialty Chemicals); octadecyl-3-(3. 5-di-tert.butyl-4-hydroxyphenyl)-propionate (CAS 002082 79-3) available as Irganox 1076; 1,3,5-tris(3,5-di-tert-butyl 4-hydroxybenzyl)-1,3,5-triazine-2,4,6(1H.3H,5H)-trione (CAS 2767-62-6) available as Irganox 3114; 1,3,5-tris(4- tert-butyl-3-hydroxy-2,6-dimethyl benzyl) 1,3,5-triazine-2, 4,6-(1H,3H,5H)-trione (CAS 040601-76) available as Cyanox 1790 (CyTech Industries); ethylenebis(oxyethylene)bis-(3-(5-tert-butyl-4-hydroxy-m-tolyl)-propionate) (CAS 36443-68-2) available as Irganox 245; 1.6-hexamethylene bis (3,5-di(tert)-butyl-4-hydroxyhydrocinnamate (CAS35074-77-2) available as Irganox 259: thiodiethylene bis3-(3,5-di-tert-butyl-4-hydroxyphenyl) propionate (CAS 41484-35-9) available as Irganox 1035; tris(2,4-ditert-butylphenyl)phosphate (CAS 31570-04-4) available as Irgafos^{™} 168 and mixtures thereof.

Non-limiting examples of metal deactivators can include 2',3-bis(3-3,5-di-tert-butyl-4-hydroxyphenylpropionylpropionohydrazide. (CAS 32687-78-8) available as Irganox^{™} MD 1024 and 2,2'-oxalyldiamidobis ethyl 3-(3,5-di-t-butyl-4-hydroxyphenyl)propionate (available as Naugard^{™} XL1), and mixtures thereof.

The foaming or blowing agent can have a boiling point of -25 to 150 °C at atmospheric pressure. Non-limiting examples of foaming or blowing agents can include water, methane, ethane, n-propane, isopropane, n-butane, isobutane, pentanes, cyclopentane, hexanes, and heptanes, halogenated hydrocarbons, an alcohol, a ketone, an ether, ester, nitrogen, air, or carbon dioxide, or a mixture thereof. It is also possible to use blowing agent mixtures. Non-limiting examples of halogenated hydrocarbons include for example dichlorodifluoromethane, trichloromonofluoromethane. Non-limiting examples of alcohols include methanol, ethanol, n-propanol, isopropanol, and n-butanol. Non-limiting examples of ketones include 3,3-dimethyl-2-butanone and 4-methyl-2-pentanone.

For every Use Cycle a RR-PCM is produced from a liquified article (e.g., a liquified foam), a new additive and/or additive package can be used prior to making a new foam so that the next RR-PCM that is made and used to make the new foam, and the new foam can have a higher amount of additive(s) when compared with the initial (prior to adding more additive) RR-PCM obtained from the liquified foam. At a very high Use Cycle rating, when the amount additive(s) in a recycled RR-PCM are so much that the amount of additive(s) affects the functional properties of the copolymer(s) made, the recycled RR-PCM may not be substantially similar to the functional properties of virgin RR-PCM or conventional polyolefin copolymers. In some aspects, at some point, there may be so much additive in the recycled RR-PCM that the recycled polyethylene may no longer function similar to the virgin RR-PCM or conventional polyolefin copolymer.

The amount of additives used to make the foam can vary by application and can be from greater than 0 wt.% to 5 wt. %, or 0.00001 wt. %, 0.0001 wt. %, 0.001 wt. %, 0.01 wt. 0.05 wt. %, 0.06 wt. %, 0.07 wt. %, 0.08 wt. %, 0.09 wt. %, 0.1 wt. %, 0.2 wt. %, 0.3 wt. %, 0.4 wt. %, 0.5 wt.%, 0.6 wt. %, 0.7 wt. %, 0.8 wt. %, 0.9 wt. 1, 1 wt. %, 2 wt. %, 3 wt. % 4 wt. %, or 5 wt. %, or any number or range there between.

The composition can include one or more optional additives. Non-limiting examples of an optional additive can include a scratch-resistance agent, an antioxidant, a flame retardant, an UV absorber, a photochemical stabilizer, a filler such as glass and/or mineral filler, an optical brightener, a surfactant, a processing aid, a mold release agent, a pigment, flow modifiers, foaming agents, or any combinations thereof. In some aspects, the composition can include at least 95 wt.% to 100 wt.% (e.g., 95 wt.%, 96 wt.%, 97 wt.%, 98 wt.%, 99 wt.%, 100 wt.% or any value or range there between) of the RR-PCM(s) and an optional additive. An amount of optional additive can be from greater than 0 to 5 wt. %, or 0.00001 wt. %, 0.0001 wt. %, 0.001 wt. %, 0.01 wt. 0.05 wt. %, 0.06 wt. %, 0.07 wt. %, 0.08 wt. %, 0.09 wt. %, 0.1 wt. %, 0.2 wt. %, 0.3 wt. %, 0.4 wt. %, 0.5 wt.%, 0.6 wt. %, 0.7 wt. %, 0.8 wt. %, 0.9 wt. 1, 1 wt. %, 2 wt. %, 3 wt. % 4 wt. %, or 5 wt. %, or any number or range there between. In some preferred aspects, the amount of the optional additive in the composition can be 0.0 wt.% to 0.2 wt.% or 0.01 wt.%, 0.05 wt.%, 0.1 wt.%, 0.15 wt.%, 0.2 wt.% or any value or range there between. In some embodiments, the composition include at least 0.01 % to 0.2 %, preferably 0.05 % to 0.15 %, of an optional additive and 95 wt.%, 96 wt.%, 97 wt.%, 98 wt.%, 99 wt.%, 100 wt.% of the RR-PCM(s).

### D. Methods of Making RR-PCM and RR-PCM Foams

### 1. Method of Making the RR-PCM

Reaction of the difunctional linker, the difunctional oligomer, and the difunctional hydrogenated polyolefin-based oligomer in the presence of an optional catalyst can form the polymer having the repeating units of Formula (I) and Formula (II), and/or the RR-PCM of Formulas (III).

The difunctional linker can having the formula 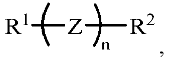 "R¹-Z-R²", where R¹ and R² are each OH, CO₂H, NH₂, or a combination thereof, and n is 2 to 13 carbon atoms. In some instances, Z can have a carbon chain of 2 to 13 carbon atoms (C2-C13), 2 to 10, or 2, 3, 4, 5, 6, 7, 8, 9, 10, 11, 12, 13 or any value or range there between. The two functional groups, R¹ and R² can be an amine (-NH₂), an alcohol (-OH), a carboxylic acid (-COOH), or a combination thereof. In some instances, the difunctional linker is a cyclic acid, a cyclic amide, a diester, or a combination of a monoacid and an ester. The functionality "F" of the difunctional linker can be a statistical value of 2.0 ± 0.3, or 1.7, 1.8, 1.9, 2.0, 2.1, 2.2, 2.3 or any value or range there between. Functionality can be measured using known chemical analysis, for example, titration methods. In some aspects, the difunctional linker can be oxalic acid, malonic acid, succinic acid, maleic acid, glutaric acid, adipic acid, pimelic acid, suberic acid, azelaic acid, sebacic acid, citric acid, aconitic acid, isocitric acid, propane-1,2,3-tricarboxylic acid, pentane-1,3,5-tricarboxylic acid, or any combinations thereof.

The difunctional oligomer can have a formula of 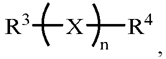 ("R³-X-R⁴") where R³ and R⁴ are each OH, CO₂H, NH₂, or a combination thereof and n can be 40 to 2000. In some aspects, X is a polyethylene or polypropylene polymer have 40 to 2000 carbon atoms, 60 to 1500 carbon atoms 80 to 1100 carbon atoms, or 40, 50, 60, 70, 80, 90, 100, 150, 200, 250, 300, 350, 400, 450, 500, 550, 600, 650, 700, 750, 800, 850, 900, 950, 1000, 1100, 1200, 1300, 1400, 1500, 1600, 1700, 1800, 1900, 2000 or any value or range therebetween of carbon atoms. X can have a degree of saturation of 98% to 100% or 98%, 98.5%, 99%, 99.5%, 99.9%, 100% or any value or range there between. The two functional groups, R³ or R⁴ can be an amine (-NH₂), an alcohol (-OH), a carboxylic acid (-COOH), or a combination thereof. The functionality "F" of the difunctional oligomer can be a statistical value of 2.0 ± 0.3, or 1.7, 1.8, 1.9, 2.0, 2.1, 2.2, 2.3 or any value or range there between. Functionality can be measured using known chemical analysis, for example, titration methods.

The difunctional hydrogenated polyolefin-based oligomer can have a formula of 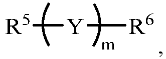 ("R⁵-Y-R⁶") where R⁵ and R⁶ are each OH, CO₂H, NH₂, or a combination thereof and m can be 40 to 2000. In some aspects, Y is a polybutadiene polymer have 40 to 2000 carbon atoms, 60 to 1500 carbon atoms 80 to 1100 carbon atoms, or 40, 50, 60, 70, 80, 90, 100, 150, 200, 250, 300, 350, 400, 450, 500, 550, 600, 650, 700, 750, 800, 850, 900, 950, 1000, 1100, 1200, 1300, 1400, 1500, 1600, 1700, 1800, 1900, 2000 or any value or range therebetween of carbon atoms. Y can have a degree of saturation of 98% to 100% or 98%, 98.5%, 99%, 99.5%, 99.9%, 100% or any value or range there between. The two functional groups, R³ or R⁴ can be an amine (-NH₂), an alcohol (-OH), a carboxylic acid (-COOH), or a combination thereof. The functionality "F" of the difunctional oligomer can be a statistical value of 2.0 ± 0.3, or 1.7, 1.8, 1.9, 2.0, 2.1, 2.2, 2.3 or any value or range there between. Functionality can be measured using known chemical analysis, for example, titration methods.

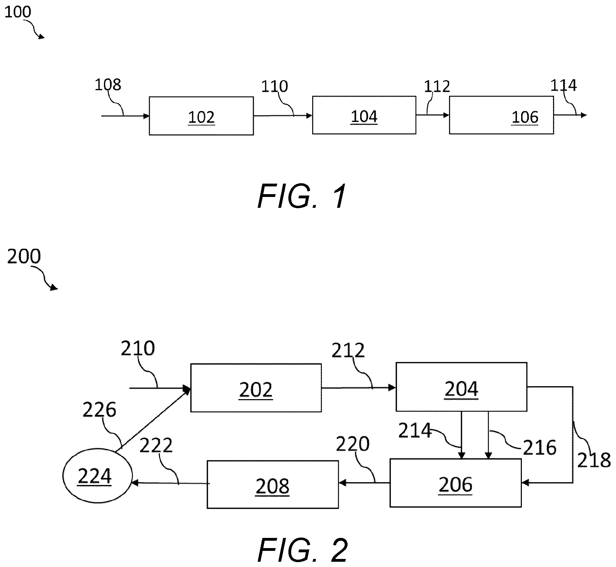

Certain aspects are directed to a method for making the RR-PCMs of the present invention. Referring to FIG. 1, a method and system to make the RR-PCM and the foam is described. System 100 can include RR-PCM reactor unit 102, RR-PCM molding unit 104, and foaming unit 106. In some embodiments, reactor unit 102, molding unit 104, and foaming unit 106 are the same units or a combination of units. Feed stream 108 can include a difunctional oligomer (e.g., oligomer R³-X-R⁴, where R³, R⁴ are each OH, CO₂H, NH₂, or a combination thereof), the difunctional hydrogenated polyolefin-based oligomer (e.g., R⁵-Y-R⁶ where R⁵ and R⁶ are each OH, CO₂H, NH₂, or a combination thereof) with the difunctional linker (*e.g.,* R¹-Z-R², where R² and R² are each OH, CO₂H, NH₂, or a combination thereof, and/or the ester thereof, where Z is as defined above) compound can enter reactor unit 102. As shown, the components are added as one feed stream. However, it should be understood that the reactants can be added as individual streams or combination stream. In reactor unit 102, feed stream 108 (e.g., the difunctional oligomer, the difunctional linker, and the difunctional hydrogenated polyolefin-based oligomer) are subjected to conditions sufficient to produce the RR-PCM. Reaction conditions can include temperature and an inert atmosphere or vacuum (e.g., 5 Pa to 0.101 MPa) A reaction temperature can be 90 °C to 250 °C, or equal to any one of, at least any one of, or between any two of 90 °C, 100 °C, 110 °C, 120 °C, 130 °C, 140 °C, 150 °C, 160 °C, 170 °C, 180°C, 190 °C, 200 °C, 210 °C, 220 °C, 230 °C, 240 °C, and 250 °C. In some aspects, the reaction can include esterification at 90 °C to 250 °C, under inert atmosphere, followed by polycondensation at 90 °C to 250 °C, under vacuum, e.g., at pressure of 0.0005 MPa, below 0.0001 MPa, below 0.00005 MPa.

In certain aspects, the reaction, (e.g., esterification and/or polycondensation) can be performed in presence of a catalyst. In some aspects, catalyst used can include but are not limited to a mineral acid, organic acid, organic base, and/or metallic compound. In some aspects, the metallic compound can be a hydrocarbyl, oxide, chloride, carboxylate, alkoxide, aryloxide, amide, salen complex, β-ketiminato complex, or guanidinato complex, of a metal. In some aspects, the metal can be Li, Na, K, Mg, Ca, Sc, Y, lanthanides, Ti, Zr, Zn, Mo, Mn, Al, Ga, Bi, Sb, or Sn. In some aspects, the catalyst can be Ti(OiPr)₄, Ti(OBu)₄, Al(OiPr)₃, Sn(2-ethyl-hexanoate)₂, MoO₃, or any combinations thereof. In certain aspects, a combination of catalysts can be used. In one aspect, a titanium tetraisopropoxide catalyst is used for the esterification reaction.

In some embodiments, RR-PCM composition 110 is isolated and stored or transported to other processing units.

### 2. Method of Making the RR-PCM Foam

As shown in FIG. 1, RR-PCM composition 110 can exit reactor unit 102 and enter molding unit 104. In molding unit 104, RR-PCM composition 110 can be melted (if necessary) and homogeneously blended with an additive (e.g., additives in Section C) to form a melted mass at non-foaming temperatures and pressures. The melted mass can be formed into a desired shape. For example, the RR-PCM/additive composition can be extruded at a controlled rate, temperature, and pressure through a die to form the desired shape. In another aspect, the RR-PCM/additive composition can be molded into a plaque using a hot press at a suitable molding temperature and pressure (e.g., 210 °C, 215, 220 °C, or any range or value there between and 3, 4, 5, or 6 MPa, or any range or value there between) for a time sufficient to produce a mold. The shaped RR-PCM/additive composition 112 can exit molding unit 104 and enter expansion unit 106. In expansion unit 106, RR-PCM/additive composition 112 can be made into a foam using known foaming or blowing techniques. In expansion unit 106, RR-PCM/additive composition 112 can be maintained at suitable temperatures and pressures for a time sufficient for the viscosity of the RR-PCM/additive composition to increase such that the cell size and density of the foam remain substantially unchanged and substantially free of ruptured cells at ambient temperature, e.g., 25° C and atmospheric pressure. Once foaming is complete, the RR-PCM foam 114 can be removed from expansion unit 106.

### E. Method of Recycling the RR-PCM(s) Foams

Certain aspects are directed to a method for making/recycling the foams of the present invention that includes the RR-PCM(s) of the present invention. Referring to FIG. 2, a system and method of recycling the foams of the present invention is illustrated. In a preferred aspect, FIG. 2 illustrates a closed loop system and method of recycling a RR-PCM foam of the present invention. System 200 can include liquification unit 202, depolymerization unit 204, polymerization unit 206, and converting unit 208. Plastic article 210 can enter liquification unit 202. Plastic article 210 can include or be a consumer product that includes polyolefin copolymer(s) and/or a foam of the present invention that includes a RR-PCM(s). In some preferred aspects, plastic article 210 is a foamed article. Non-limiting examples of consumer goods can include a packaging product, a pharmaceutical container, a bottle, a cap, a closure, a liner, a trash bag, a food packaging film, a lamination, a pipe, a hose, a fitting, a footwear sole, a footwear insole, an exercise mat *(e.g.,* a yoga mat), a protective cushion packaging, or a combination thereof. In some aspects, the plastic article can contain a blend of the RR-PCM(s) of varying molecular weight. The plastic article can also include an article additive. Plastic article 210 can be optionally cleaned of contaminants (e.g., inert materials) and shredded into smaller pieces prior to being fed to liquification unit 202. In liquification unit 202, plastic article 210 can be heated to melt the article (e.g., heated to a temperature of 120 °C to 250 °C) and produce a liquified article composition 212. Liquification unit 202 can be an extruder, stirred tank and/or a combination thereof. Liquified article composition 212 can include the RR-PCM(s) and an article additive.

Liquified article composition 212 can exit liquification unit 202 and enter depolymerization unit 204. In some instances, liquification unit 202 and depolymerization unit 204 can be the same unit. In depolymerization unit 204, liquified article composition 212 can be subjected to conditions to depolymerize the RR-PCM(s) in the liquified article composition to produce a liquified article that includes a mixture of difunctional oligomers, difunctional linkers, and difunctional hydrogenated polyolefin-based oligomers Depolymerization conditions can include temperature and pressure. Depolymerization temperature can be from 190 °C to 350 °C or 190 °C, 195 °C, 200 °C, 225 °C, 250 °C, 275 °C, 300 °C, 325 °C, 350 °C, or any range or value there between. A depolymerization pressure can range from 3 MPa to 4.5 MPa, or 3 MPa, 3.1 MPa, 3.2 MPa, 3.3 MPa, 3.4 MPa, 3.5 MPa, 3.6 MPa, 3.7 MPa, 3.8 MPa, 3.9 MPa, 4.0 MPa, 4.1 MPa, 4.2 MPa, 4.3 MPa, 4.4 MPa, 4.5 MPa, or any range or value there between. In some aspects, the depolymerization can be performed at an inert atmosphere. In some instances, the depolymerization conditions can be 195 °C to 205 °C at 3.8 to 4.0 MPa. At these reaction conditions, the RR-PCM(s) depolymerizes and forms the difunctional oligomers, difunctional linkers, and tetrafunctional branched hydrocarbon compounds. The difunctional oligomer can be a solid, liquid, or a combination thereof. The difunctional linkers can be a solid, liquid, or combination thereof. The difunctional hydrogenated polyolefin-based oligomer can be a solid, liquid, or a combination thereof. Depolymerization can include hydrolysis and/or solvolysis (e.g., alcoholysis) of the RR-PCM(s) to obtain the difunctional oligomer R³-X-R⁴, where R³ and R⁴ are each OH, CO₂H, NH₂, or a combination thereof, the difunctional linker R¹-Z-R², where R² and R² are each OH, CO₂H, NH₂, or a combination thereof, and the difunctional hydrogenated polyolefin oligomer R⁵-Y-R⁶, where R⁵ and R⁶ are each OH, CO₂H, NH₂, or a combination thereof. In certain aspects, the depolymerization method can include methanolysis of the composition under conditions suitable to obtain the difunctional oligomer (*e.g.,* R³-X-R⁴, where R³ and R⁴ are each OH,), a methyl ester of the difunctional linker (*e.g.,* R¹-Z-R², where R¹ and R² are masked acid (e.g., CH₃O₂C-Z-CO₂CH₃)), the difunctional hydrogenated polyolefin oligomer (e.g., R⁵-Y-R⁶, where R⁵ and R⁶ are each OH, CO₂H, NH₂, or a combination thereof), or a mixture thereof. Non-limiting examples of a catalyst used for methanolysis depolymerization can include a mineral acid, organic acid, organic base, and/or metallic compound. Non-limiting examples of metallic compounds can include a metal complexed or bonded to a hydrocarbyl, an oxide, a chloride, a carboxylate, an alkoxide, an aryloxide, an amide, a salen ligan, a β-ketiminato ligand, or a guanidinato ligan. In some aspects, the metal can be Li, Na, K, Mg, Ca, Sc, Y, lanthanides, Ti, Zr, Zn, Mo, Mn, Al, Ga, Bi, Sb, or Sn. In some aspects, the catalyst can be Ti(OiPr)₄, Ti(OBu)₄, Al(OiPr)₃, Sn(2-ethylhexanoate)₂, MoO₃, or any combinations thereof.

In some instances, depolymerization unit 204 can include one or more separation/purification units. The separation/purification units can be a part of depolymerization unit 204 or a separate unit (not shown). The separation units can separate the difunctional oligomers and/or the difunctional hydrogenated polyolefin-based oligomer from the difunctional linkers and the depolymerization composition. For example, the difunctional oligomer(s) and/or the difunctional hydrogenated polyolefin-based oligomer can be solids, and the difunctional linker(s) can be a liquid or vice versa. In such instances, the solid can be separated from the depolymerization composition using filtration, centrifugation, precipitation, or other known separation techniques. In some instances, the liquid component can be separated from the depolymerization composition using distillation methods. In other instances, all compounds are liquids or solids and solid/solid or liquid/liquid separation/purification methods can be used to isolate the solids or liquids. Separation units can help to remove impurities and/or other unwanted items prior to repolymerization. In some aspects, oligomers, and linkers from other RR-PCM processes that are desired can be separated from the desired oligomers, linkers, and tetrafunctional branched hydrocarbon compounds. For example, any homopolymers of PP, LDPE, HDPE or LLDPE, or a combination thereof can be separated from the RR-PCM difunctional oligomers.

In some aspects, difunctional oligomer stream 214 and/or difunctional linker stream 216 and/or difunctional hydrogenated polyolefin-based oligomer 218 can exit depolymerization unit 204 and enter polymerization unit 206. In some instances, the streams exit depolymerization unit 204 as a single stream. In some aspects, the article additive is included in oligomer stream 214, linker stream 216, difunctional hydrogenated polyolefin-based oligomer 218, or combination thereof. In some instances, depolymerization unit 204 and polymerization unit 206 are the same unit. In another instance, liquification unit 202, depolymerization unit 204, and polymerization unit 206 can be the same unit. In polymerization unit 206, difunctional oligomer 214, difunctional linker 216, and difunctional hydrogenated polyolefin-based oligomer 218 can be subjected to conditions to produce recycled RR-PCM(s). Said another way, the difunctional oligomers, difunctional linkers, and difunctional hydrogenated polyolefin-based oligomer in streams 214, 216, and 218 can be repolymerized to form a recycled RR-PCM(s). The recycled RR-PCM(s) can include an article additive from the liquified article 210. In polymerization unit 206, the difunctional oligomers, difunctional hydrogenated polyolefin-based oligomer, and difunctional linkers can be reacted at conditions described throughout the specification.

In some aspects, a virgin linker or oligomer can be used with a recycled oligomer or linker. For example, the difunctional oligomer (e.g., HO-X-OH) obtained from a liquefied article can be repolymerized with a virgin difunctional linker (e.g., HO₂C-Z-CO₂H, an ester, and/or cyclic anhydride thereof (e.g., of the acid of HO₂C-Z-CO₂H)) and virgin difunctional hydrogenated polyolefin-based oligomer.

Recycled RR-PCM(s) 220 can exit polymerization unit 206 and be sold, transported, formed into a consumer product, or formed into RR-PCM foam. In some aspects, the article additive is included in the recycled RR-PCM(s) 220. As shown in FIG. 2, recycled RR-PCM(s) 220 exits polymerization unit 206 and enters converting unit 208. Converting unit 208 can be onsite or offsite. Converting unit 208 can be a commercial manufacture of consumer goods and/or articles of manufacture (e.g., molding, and foaming units). Recycled RR-PCM(s) 220 can be formed into recycled RR-PCM foamed article 222 that includes the recycled RR-PCM(s) of the present invention. For example, recycled RR-PCM(s) 220 can be molded (e.g., extruded, injection molded, blow molded, compression molded, rotational molded, thermoformed and/or 3-D printed) and foamed to form recycled RR-PCM article 222. In some aspects, recycled RR-PCM article 222 can be comprised in or in the form of a foam. In some aspects, an article additive can be combined with the recycled RR-PCM(s) 222 prior to being sent to the converting unit 208. The additive can be an article additive package that is typically used with the article to be produced (e.g., a blowing or foaming agent). In some aspects, another article additives (e.g., antioxidants) are not combined with the recycled RR-PCM(s) 220 prior to being sent to the converting unit 208, which may be advantageous if the article being recycled, and the article being made are the same type or class of articles. In such an aspect, the additive present in the article being liquified in liquification unit 202 can be preserved throughout the liquification, depolymerization, and re-polymerization steps, such that no or reduced amounts of additive is added prior converting unit 208.

In some aspects, recycled RR-PCM article 222 can contain a blend of the RR-PCM(s) of varying molecular weight. In some aspects, recycled RR-PCM(s) article 222 can further include one or more virgin additives. The additives can be added in polymerization unit 206 and/or converting unit 208. Non-limiting examples of additives can include, a scratch-resistance agent, an antioxidant, a flame retardant, an UV absorber, a photochemical stabilizer, a filler such as glass and/or mineral filler, an optical brightener, a surfactant, a processing aid, a mold release agent, a pigment, flow modifiers, or any combinations thereof.

Recycled RR-PCM(s) article 222 (e.g., RR-PCM foam) can exit converting unit 220 and be sold, transported, used, and/or stored. Recycled RR-PCM(s) article 222 can be used and collected by consumers 224. After use, used recycled RR-PCM(s) article 226 containing recycled RR-PCM(s) can be provided to liquification unit 202, and a new cycle can be started. The cycle of the present method can be continuously repeated (e.g., 2 to 500 times (e.g., 2, 5, 10, 15, 20, 25, 50, 75, 100, 125, 150, 175, 200, 225, 250, 275, 300, 325, 350, 375, 400, 425, 450, 475, or 500 times, or any value or range there between)). In one aspect, a closed-loop recycling of the RR-PCM(s) can now be realized.

### F. RR-PCM(s) Use Cycles

In some aspects, the RR-PCM foams of the present invention exhibits favorable Use Cycle ratings such that recycled RR-PCM foams can be made into different articles or foams such that instead discarding each article can be liquefied and repolymerized into another RR-PCM(s) material. FIG. 3 is an illustration of Use Cycle 300. In Block 302, RR-PCM(s) (RR-PCM)ₙ) is shown, where n is an integer (e.g., 0 to 10000, or more). In Block 304, an Articleₙ can be made from Block 302 RR-PCMₙ. When n is 1, this can represent Use Cycle 1. In Block 306, the Articleₙ from Block 304 made from RR-PCMₙ can be liquefied by heating and depolymerization as described above to produce difunctional oligomer(s) and difunctional(s) linkers of Articleₙ. In Block 308, the liquified Articleₙ of Block 306 *(e.g.,* the difunctional oligomer(s). difunctional hydrogenated polyolefin-based oligomer(s), and difunctional linker(s) of the present invention) can be polymerized to produce RR-PCMₙ₊₁. In Block 310, the Articleₙ₊₁ (e.g., a foam made from RR-PCM) can be produced from the RR-PCMₙ₊₁ of Block 308. When n is 2, this represents a Use Cycle of 2. Generally, the RR-PCM has a Use Cycle rating of at least 2. In Block 312, the process can be continued, where Articleₙ₊₁ of Block 310 can be liquefied by heating and depolymerization as described above to produce difunctional oligomer(s), difunctional hydrogenated polyolefin-based oligomer(s), and difunctional(s) linkers. In Block 314, the liquified Articleₙ₊₁ of Block 312 *(e.g.,* the difunctional oligomer(s), difunctional hydrogenated polyolefin-based oligomer(s), and difunctional linker(s) of the present invention) can be polymerized to produce a new RR-PCM material to continue the cycle. In one embodiment, the RR-PCM has a Use Cycle rating ranging from 2 to 1000. In another embodiment, the RR-PCM has a Use Cycle rating ranging from 2 to 500. In another embodiment, the RR-PCM has a Use Cycle rating ranging from 2 to 400. In another embodiment, the RR-PCM has a Use Cycle rating ranging from 2 to 300. In another embodiment, the RR-PCM has a Use Cycle rating ranging from 2 to 300. In another embodiment, the RR-PCM has a Use Cycle rating ranging from 2 to 200. In another embodiment, the RR-PCM has a Use Cycle rating ranging from 2 to 100. In some aspects, the Use Cycle rating can be greater than 1000 *(e.g.,* 1500, 2000, 3000, 4000, 5000, 6000, 7000, 8000, 9000, 10000, or more). In some aspects, the US Cycle rating can be 2, 5, 10, 15, 20, 25, 30, 35, 40, 45, 50, 55, 60, 65, 70, 75, 80, 85, 90, 100, 200, 300, 400, 500, 600, 700, 800, 900, 1000, 2000, 3000, 4000, 5000, 6000, 7000, 8000, 9000, 10000, or more, or any range or number therein.

Advantageously, the Use Cycle ratings can be achieved without having to use additional feed stock (e.g., virgin RR-PCM feed stock) or by using a limited amount of additional feed stock (5, 4, 3, 2, 1, 0.5, or 0 wt. % of virgin RR-PCM feed stock).

Remarkably, it is now possible to make a RR-PCM(s) that is functionally similar to conventionally made polyolefin copolymers, or a virgin RR-PCM, and that can be repeatedly reused. This can reduce or eliminate the use of single-use foams and/or increase the efficiency of traditional chemical recycling processes. Instead of using the traditional process of making a RR-PCM(s) foams from monomers, the compositions, recycled RR-PCM, and foams of the present invention can be made from difunctional oligomers, difunctional hydrogenated polyolefin-based oligomers, and difunctional linkers obtained from a recycled article (e.g., a foam) that would have typically been discarded into a landfill or incinerated. Advantageously, the compositions, recycled RR-PCM, articles, and/or processes of the present invention are highly efficient at being recycled and made into new articles (e.g., at least 90, 91, 92, 93, 94, 95, 96, 97, 98, 99, or 100 %, of recycled RR-PCM obtained from an article (e.g., a foamed article) can be recycled to produce a new article.

### EXAMPLES

The present invention will be described in greater detail by way of specific examples. The following examples are offered for illustrative purposes only and are not intended to limit the invention in any manner. Those of skill in the art will readily recognize a variety of noncritical parameters, which can be changed or modified to yield essentially the same results.

### Instrumentation

Thermal analysis was conducted on a DSC Q100 from TA Instruments at a heating rate of 10 °C per minute. First and second runs were recorded after cooling down to about - 40 °C. The melting temperatures reported correspond to second runs.

HT-SEC Procedure. The molecular weight and dispersity were determined by means of high temperature size exclusion chromatography (HT-SEC) performed at 150 °C in a HT-SEC-IR instrument equipped with a IR4 detector (PolymerChar, Valencia, Spain). Three Polymer Laboratories 13 µm PLgel Olexis columns constitute the set. 1,2-dichlorobenzene (o-DCB) was purchased from VWR and used as an eluent at flow rate of 1 mL*min⁻¹. Molecular weights and corresponding dispersities were calculated from HT-SEC analysis with respect to narrow polystyrene standards (PSS, Mainz, Germany).

### Example 1

### (Production of a virgin RR-PCM)

Material description: block copolymer was made from α,ω-dihydroxy oligoethylene, hydrogenated α,ω-dihydroxy polybutadiene, and succinic acid. Ratio of α,ω-dihydroxy oligoethylene, hydrogenated α,ω-dihydroxy polybutadiene and succinic acid was 4:6:10. C4 (1-butene) content in hydrogenated α,ω-dihydroxy polybutadiene was C4 (1-butene) content in hydrogenated α,ω-dihydroxy polybutadiene was 65 wt% %. The α,ω-dihydroxy oligoethylene (56.4 g, 28.0 mmol), hydrogenated α,ω-dihydroxy polybutadiene (75.8 g, 42.0 mmol) succinic acid (8.2 g, 70 mmol) and titanium tetra-isopropoxide (110 mg) were introduced into the reactor and the reactor was then heated to 190 °C under stirring and in the presence of nitrogen atmosphere. The first stage, esterification was carried out for 2.5 hrs under nitrogen atmospheric. After that, the second stage, polycondensation was started by increasing the temperature to 225 °C, turning off the nitrogen and gradually reducing the pressure down to <1 mbar. After polycondensation reaction for 3.0 hrs, the vacuum was released by bleeding in the nitrogen and the polymer was collected. Tables 1 and 2 lists the properties of the RR-PCM.

**Table 1**

| **RR-PCM Composition** | **Young's modulus Eₜ (MPa)** | **Yield stress σ_{y} (MPa)** | **Stress at break σ_{b} (MPa)** | **Elongation at break ε_{b} (%)** |
|---|---|---|---|---|
| Example 1 | 1.1. ± 0.5 | 3.0 ± 0.1 | 2.9 ± 0.5 | 92.0 ± **22.0** |

**Table 2**

| **RR-PCM Composition** | **Mₙ (Kg/mol)** | **M_{w} (Kg/mol)** | **PDI** | **Tₘ (°C)** | **T_{c} (°C)** | **T_{g} (°C)** | **X_{c} (%)** |
|---|---|---|---|---|---|---|---|
| Example 1 | 8.5 | 33.9 | 4.0 | 116.4 | 101.5 | -38.0 | 16.2 |

### Example 2

### (Production of a foamed article produced from a RR-PCM)

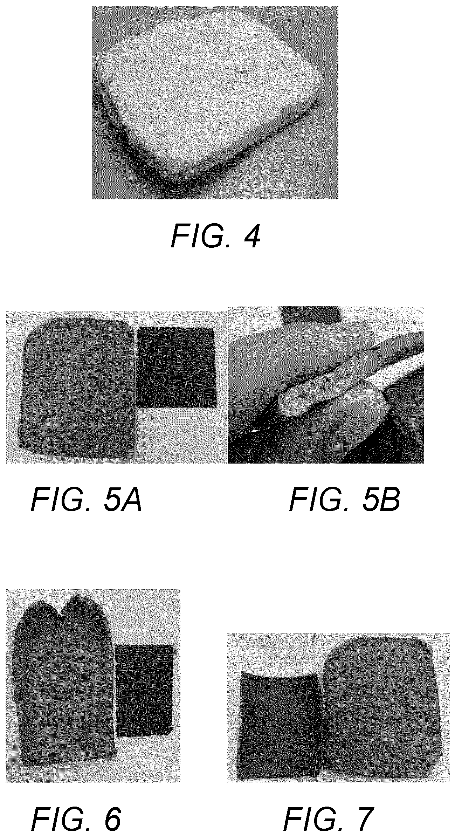

The RR-PCM of Example 1 was made into foamed articles. RR-PCM composition of Example 1 was molded into a 2 mm thick plaque by hot press at a molding temperature of 170 °C and molding pressure of 25 bar (5 MPa) for 10 min. The solid-state foam machine was set to a set foaming temperature. The mold was opened and the plaque was placed into the mold cavity. The mold was closed and a blowing agent was injected to set a foaming pressure. After a set saturation time, the pressure was discharged, the mold opened and the foam sample was removed from the mold. Table 3 lists the foaming parameters and properties of the produced foam. FIG. 4 depicts an image of the formed foam.

**Table 3**

| | |
|---|---|
| Foam pressure | 5 MPa N₂ followed by 5 MPa CO₂ |
| Saturation time | 60 min |
| Foam temperature | 116 °C |
| Foam density (ASTM D297) | 0.0820 g/cm³ |
| Surface hardness (ASTM D2240) | 15 Shore C |
| Rebound after foam (ASTM D2632) | 42% |
| Rebound after 24-hour aging (ASTM D2632) | 30% |

### Example 3

### (Production of a virgin RR-PCM)

A RR-PCM of the present invention was made from α,ω-dihydroxy oligoethylene, a diol oligomer (Pripol 2033, Croda) and succinic acid using the procedure of Example 1. The ratio of α,ω-dihydroxy oligoethylene, Pripol 2033 and succinic acid was 6:4:10. The RR-PCM had a Tₘ of 125.38 °C. α,ω-dihydroxy oligoethylene (82 g, 54.0 mmol), Pripol 2033 (9.7 g, 36 mmol) succinic acid (10.6 g, 90 mmol) and titanium tetra-isopropoxide (80 mg) were introduced into the reactor and the reactor was then heated to 190 °C under stirring and in the presence of nitrogen atmosphere. The first stage, esterification was carried out for 2.5 hrs at atmospheric pressure. After that, the second stage, polycondensation was started by turning off the nitrogen and by gradually reducing the pressure down to <1 mbar and the temperature was raised to 225 °C. After polycondensation reaction for 3.0 hrs, the vacuum was released by bleeding in nitrogen and the polymer was collected.

### Example 4

### (Production of a foamed article produced from a RR-PCM of Example 3)

The RR-PCM composition of Example 3 was made into three foamed articles. The RR-PCM composition of Example 3 was molded into three 1 mm thick plaques by hot pressing at a 215 °C molding temperature and a 50 bar molding pressure for 5 min. Each plaque was foamed using the following procedure. The solid-state foaming machine was set to a set foaming temperature. The mold was opened and the plaque was placed into the mold cavity. The mold was closed and a blowing agent was injected to set a foaming pressure. After a set saturation time, the pressure was discharged, the mold opened and the foam sample was removed from the mold.

Table 4 lists the foaming parameters and properties of the produced foam. FIG. 5A depicts an image of the foam (left) and molded plaque (right). FIG. 5B depicts an image of a cross-sectional of foam of FIG. 5A (sample 4-1). FIG. 6 depicts images of the foam of sample 4-2 (left) and the molded plaque (right). FIG. 7 depicts images of foam sample 4-1 (left) and foam sample 4-3 (right).

**Table 4**

| | Sample 4-1 | Sample 4-2 | Sample 4-3 |
|---|---|---|---|
| Foam pressure | 6 MPa N₂ followed by 4 MPa CO₂ | | |
| Saturation time | 60 min | | |
| Foam temperature | 125 °C | 120 °C | 116 °C |
| Foam density (ASTM D297) | 0.1552 g/cm³ | 0.1298 g/cm³ | 0.5308 g/cm³ |
| Surface hardness (ASTM D2240) | 62 Shore C | 58 Shore C | - |
| Rebound after 24-hour aging (ASTM D2632) | 20% | 16% | - |

Although embodiments of the present application and their advantages have been described in detail, it should be understood that various changes, substitutions, and alterations can be made herein without departing from the spirit and scope of the embodiments as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the above disclosure, processes, machines, manufacture, compositions of matter, means, methods, or steps, presently existing or later to be developed that perform substantially the same function or achieve substantially the same result as the corresponding embodiments described herein can be utilized. Accordingly, the appended claims are intended to include within their scope such processes, machines, manufacture, compositions of matter, means, methods, or steps.

## Claims

1. A foam comprising a repeatedly recyclable-polyolefin copolymer mimic (RR-PCM), wherein the RR-PCM is a reaction product of a difunctional linker, a difunctional oligomer, and a difunctional hydrogenated polyolefin-based oligomer, wherein the number average molecular weight (Mₙ) of the RR-PCM ranges from 500 g/mol to 100,000 g/mol, preferably 500 g/mol to 10,000 g/mol, and the wherein the RR-PCM has a total degree of branching of 70% or less.

2. The foam of claim 2, wherein the difunctional linker has a carbon chain of two to thirteen carbon atoms (C2 to C13) and a F of 2.0 ±0.3, the difunctional oligomer has 40 to 2000 carbon atoms (C40 to C2000) and a functionality (F) of 2.0 ± 0.3, and the difunctional hydrogenated polyolefin-based oligomer has 40 to 2000 carbon atoms (C40 to C2000) and a functionality (F) of 2.0 ± 0.3, where each F is independently selected from an amine (-NH₂), an alcohol (-OH), a carboxylic acid (-COOH), and combinations thereof.

3. The foam of any one of claims 1 to 2, wherein the RR-PCM composition has repeating units according to Formula I and Formula II: 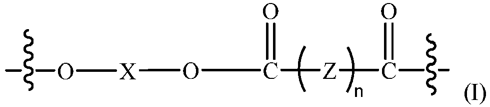 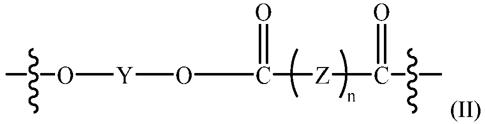 wherein,
n is an integer ranging from 2 to 13;
Z is an aliphatic group for each of Formula I and II;
X is a polyolefin backbone comprising 40 to 2000 carbon atoms, preferably 60 to 1500 carbon atoms, or more preferably 80 to 1100 carbon atoms; and
Y is a hydrogenated polyolefin backbone comprising 40 to 2000 carbon atoms, preferably 60 to 1500 carbon atoms, or more preferably 80 to 1100 carbon atoms,
wherein Formula I or Formula II, or both, comprise 0.01 to 40 ester groups per 1,000 backbone carbon atoms, and
wherein the RR-PCM composition has a total degree of branching (X+Y) of 70% or less.

4. The foam of any one of claims 1 to 3, wherein the RR-PCM has a Mₙ of 0.5 Kg/mol to 100 Kg/mol, preferably 3 Kg/mol to 95 Kg/mol.

5. The foam of any one of claims 1 to 4, wherein the RR-PCM has a stress break at 1 MPa to 5 MPa.

6. The foam of any one of claims 1 to 5, wherein the RR-PCM has an elongation break of 50% and above, preferably 100% to 400%.

7. The foam of any one of claims 1 to 6, wherein the RR-PCM has a polydispersity index of 2 to 6.

8. The foam of any one of claims 1 to 7, wherein the RR-PCM has a melting point of 70 °C to 130 °C, preferably 115 °C to 120 °C.

9. The foam of any one of claims 3 to 8, wherein X is a linear hydrocarbon polyolefin-based oligomer and Y is a hydrogenated polyolefin-based oligomer, preferably hydrogenated polyolefin butadiene.

10. The foam of any one of claims 1 to 9, wherein the foam has a rebound after foaming of 40% to 80%, and a rebound of 30% to 75% after 24 hours after foaming.

11. The foam of any one of claims 1 to 10, wherein the RR-PCM is obtained from an article comprising a difunctional linker, a difunctional oligomer, and a difunctional hydrogenated polyolefin-based oligomer.

12. A method of making the foam of any one of claims 1 to 11, the method comprising subjecting a repeatedly recyclable-polyolefin copolymer mimic (RR-PCM) to foaming conditions suitable to produce a foam, wherein the RR-PCM is a reaction product of a difunctional linker, a difunctional oligomer, and a difunctional hydrogenated polyolefin-based oligomer, wherein the number average molecular weight (Mₙ) of the RR-PCM ranges from 0.5 g/mol to 100,000 g/mol, preferably 500 g/mol to 100,000 g/mol, preferably 500 g/mol to 10,000 g/mol, and the wherein the RR-PCM has a total degree of branching of 70% or less.

13. An article of manufacture comprising the foam of any one of claims 1 to 11.

14. The article of manufacture of claim 13, wherein the article of manufacture is a shoe sole, preferably an insole, a midsole, or an outsole, preferably a midsole.

15. The article of manufacture of claim 13, wherein the article of manufacture is a yoga mat, or a protective cushion packaging.
